# EUROPEAN PATENT SPECIFICATION

(11) **EP 4 524 698 B1**
(45) Date of publication and mention of the grant of the patent: **26.08.2026**
(21) Application number: 24191737.6
(22) Date of filing: 30.07.2024
(51) Int. Cl.: G06F 3/04815, G06F 3/04842, G06F 3/04845, G06T 7/11, G06T 11/00, G06T 19/20, G06F 3/147, G02B 27/01, G06T 19/00, H04N 13/361

(54) **A SYSTEM FOR RENDERING TWO-DIMENSIONAL CONTENT IN A THREE-DIMENSIONAL VIRTUAL REALITY ENVIRONMENT, AND A METHOD THEREOF**
SYSTEM ZUR DARSTELLUNG ZWEIDIMENSIONALER INHALTE IN EINER DREIDIMENSIONALEN UMGEBUNG DER VIRTUELLEN REALITÄT UND VERFAHREN DAFÜR
SYSTÈME DE RENDU DE CONTENU BIDIMENSIONNEL DANS UN ENVIRONNEMENT DE RÉALITÉ VIRTUELLE TRIDIMENSIONNEL, ET PROCÉDÉ ASSOCIÉ

(30) Priority: 18.08.2023 GB 202312618
(43) Date of publication of application: 19.03.2025
(73) Proprietor: Sony Interactive Entertainment Inc., Tokyo 108-0075 (JP)
(72) Inventor: CONNOR, Patrick, London, W1F 7LP (GB); MONTI, Maria, London, W1F 7LP (GB)
(74) Representative: D Young & Co LLP

(56) References cited:
- US-A1- 2014 362 180
- US-A1- 2023 017 779

## Description

### Field of Invention

The present invention relates to a system for rendering two-dimensional content in a three-dimensional virtual reality environment, and a method thereof.

### Background

In recent times, video content has become increasingly immersive. This has been due, in part, to the proliferation of head-mounted displays (HMDs), through which viewers are able to view such content. HMDs enable viewers to view content that has been superimposed over their world view, be that partially (in the case of augmented reality) or completely (in the case of virtual reality). In some cases, virtual content may be displayed to a viewer in a manner that respects the physical environment in which they are located (so-called mixed reality).

In order to provide such immersive experiences, virtual reality (VR) content rendered for display by the HMD is typically three-dimensional (3D) in nature. For example, such VR content typically takes the form of a spherical video whose centre corresponds to the HMD user's head, and a portion of that spherical video that corresponds with the current orientation of the user's head (and therefore the HMD) is rendered for display on the screens of the HMD to the user, thus providing the user with a point of view into the VR content.

US 2023/017779 A1 discloses a video processing method for a circular panoramic video recording including an original field of view region at a first resolution and a further peripheral region outside the original field of view at a second, lower resolution, the method including the steps of performing spatial upscaling of the further peripheral region to a resolution higher than the second resolution.

Certain HMDs, such as the PlayStation ^{®} VR2, may also render conventional two-dimensional (2D) content for display on the display screens thereof as part of a so-called "Cinematic Mode". In Cinematic Mode, the 2D content (which is typically of a rectangular format) is rendered and/or overlaid onto a virtual surface (such as a virtual cinema screen) comprised within a 3D virtual environment (such as a virtual cinema theatre). This provides a more immersive experience for watching 2D content, as the HMD user may experience the 2D content as if it were being played in a cinema.

However, a particular problem that arises in Cinematic Mode is that of text rendering. 2D content is typically in format that makes it suitable for display on TV screens or computer screens. The 2D content is therefore typically of a high resolution (1080p, 4K, and the like) in order to provide an optimal viewing experience on such screens. However, when being rendered as part of Cinematic Mode, the effective size of the screen on which this high resolution 2D content is being rendered is typically smaller than that of TV/computer screens, which leads to issues with rendering any text comprised within the 2D content (subtitles, heads up displays, and the like). For example, the effect of aliasing on the text typically reduces the legibility of such text to the user viewing the 2D content in Cinematic Mode.

The present invention seeks to alleviate or mitigate this issue.

### Summary of the Invention

The independent claims define the invention.

Preferred embodiments are defined by the dependent claims.

Embodiments of the present invention will now be described by way of example with reference to the accompanying drawings, in which:
- Figure 1 schematically illustrates an entertainment system operable as a system in accordance with embodiments of the present description;
- Figure 2 schematically illustrates a system in accordance with embodiments of the present description;
- Figure 3 schematically illustrates a non-limiting example of 2D content;
- Figure 4 schematically illustrates a non-limiting example of 2D content being rendered as part of a Cinematic Mode;
- Figure 5 schematically illustrates 2D content with a plurality of recognised regions of interest thereof;
- Figure 6 schematically illustrates a non-limiting example of 2D content being rendered as part of a candidate 3D VR environment;
- Figure 7 schematically illustrates a non-limiting example of a mask image; and
- Figure 8 schematically illustrates a non-limiting example of a method in accordance with embodiments of the present description.

### Description of the Embodiments

A system for rendering two-dimensional content in a three-dimensional virtual reality environment, and a method thereof are disclosed. In the following description, a number of specific details are presented in order to provide a thorough understanding of the embodiments of the present invention. It will be apparent, however, that specific details known to the person skilled in the art are omitted for the purposes of clarity where appropriate.

In an example embodiment of the present invention, an entertainment system is a non-limiting example of such a system.

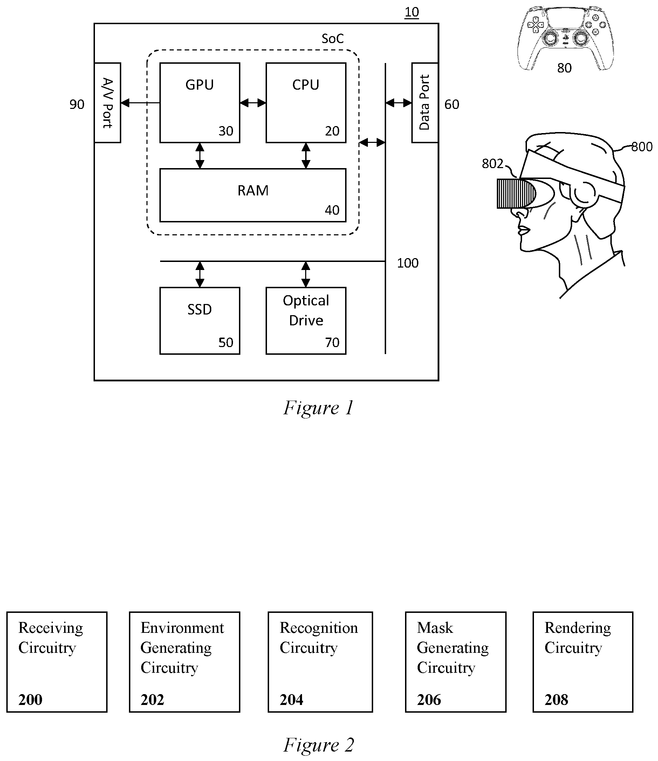

Referring to Figure 1, an example of an entertainment system 10 is a computer or console such as the Sony ^{®} PlayStation 5 ^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

As mentioned previously, a particular problem that arises in Cinematic Mode is that of text rendering. This is because 2D content is typically in a format that makes it suitable for display on TV screens or computer screens (that is, a high resolution rectangular format, for example). However, when rendered as part of Cinematic Mode, the effective size of the screen on which this high resolution 2D content is being rendered is smaller than that of TV/computer screens, which leads to issues such as aliasing, which reduces the legibility of the text.

It should be noted that the term "2D content" refers to content in a format that is not in itself responsive to the head orientation of a user viewing the content. That is to say that the format of the 2D content is such that the portion of 2D content rendered for display to the user is not responsive to the user's head movements/orientation, this typically being because the entirety of the 2D content is usually rendered on the display screen (the entire image frame of a non-VR film is typically displayed on a TV screen, for example). Therefore, 2D content may be thought of as the opposite of the aforementioned 3D spherical video format typically used for VR content.

This problem can be alleviated or mitigated by implementing means to detect regions of interest (subtitles, for example) comprised within the 2D content (either when the 2D content is in its 2D format and/or when being output as part of the Cinematic Mode), and generate a mask image that indicates regions of the 3D virtual environment that comprise these regions of interest when Cinematic Mode is enabled. Such means would subsequently upscale regions of the 3D virtual environment that corresponds to the regions of interest as indicated in the mask image, and thus make the detected text/virtual objects comprised in such regions sharper/more legible for users.

Accordingly, turning now to Figure 2, in embodiments of the present description, a system for rendering two-dimensional, 2D, content in a three-dimensional, 3D, virtual reality environment, comprises: receiving circuitry 200 configured to receive the 2D content, the 2D content being in a 2D format; environment generating circuitry 202 configured to generate the 3D virtual reality environment, wherein the 3D virtual reality environment comprises a virtual surface upon which the 2D content is to be rendered; recognition circuitry 204 configured to recognise one or more regions of interest in the 2D content; mask generating circuitry 206 configured to generate, in dependence upon a location of the virtual surface within the generated 3D virtual reality environment and in dependence upon at least one recognised region of interest in the 2D content, a mask of the generated 3D virtual reality environment, wherein the mask indicates at least one region within the 3D virtual reality environment in which the at least one recognised region of interest is to be rendered; and rendering circuitry 208 configured to render the 3D virtual reality environment for display at a head mounted display, HMD, wherein rendering circuitry 208 is configured to render the 2D content on the virtual surface, and upscale the at least one region within the 3D virtual reality environment indicated in the mask.

It will be appreciated that references herein to a 'virtual reality environment' encompass a virtual environment that may be displayed by any suitable means, including a television (not shown) or a head mounted display (HMD) 802.

### 2D Content

In embodiments of the present description, receiving circuitry 200 is configured to receive the 2D content, the 2D content being in a 2D format. In embodiments of the present description, receiving circuitry 200 may be one or more data ports, such as data port 60, USB ports, Ethernet ^{®} ports, WiFi ^{®} ports, Bluetooth ^{®} ports, or the like.

As mentioned previously, the term "2D content" refers to content in a (2D) format that is not in itself responsive to the head orientation of a user viewing the content. That is to say that the 2D format of the 2D content is such that the portion of 2D content rendered for display to the user is not responsive to the user's head movements/orientation, this typically being because the entirety of the 2D content is usually rendered on the display screen (the entire image frame of a non-VR film is typically displayed on a TV screen, for example). Therefore, 2D content may be thought of as the opposite of the aforementioned 3D spherical video format typically used for VR content. As will be appreciated by persons skilled in the art, such 2D content may correspond to image data of a film, video game, website, and the like.

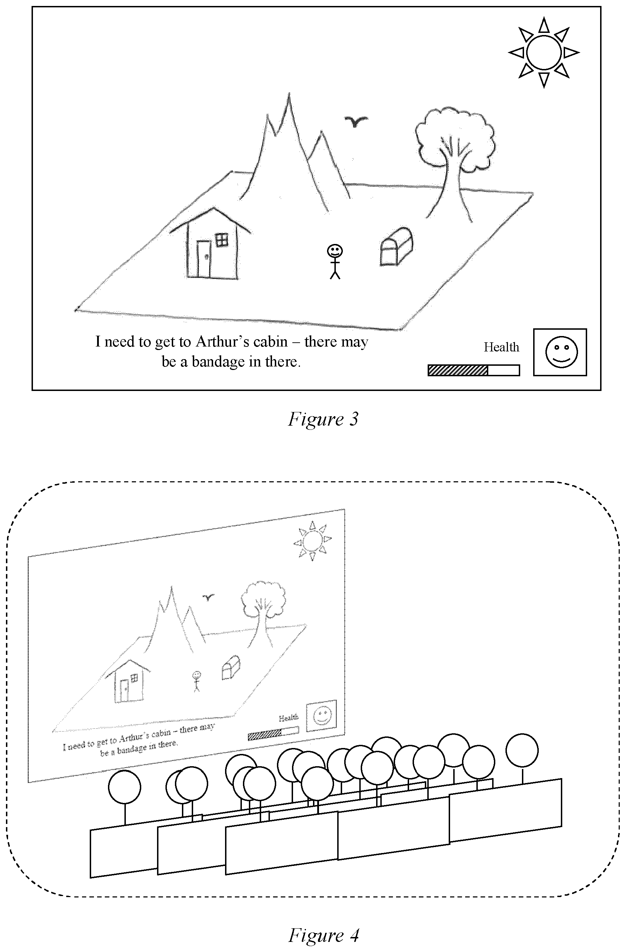

Figure 3 depicts a 2D image frame of a video game that a user wishes to spectate, and Figure 4 depicts the same 2D image frame being output/overlaid on a virtual cinema screen (that is, a virtual surface) in a virtual cinema theatre (that is, a 3D VR environment) comprising a virtual audience (that is, other virtual characters/objects) as part of a Cinematic Mode of the HMD. The user may therefore spectate the video game as if it were being shown in a cinema theatre. The skilled person will appreciate that while the present description refers to a Cinematic Mode of the HMD, the techniques discussed herein are equally applicable to other modes of displaying 2D content on a virtual surface in a 3D VR environment. For example, the 2D content may be output on a virtual billboard/wall in a virtual city of a racing video game, on a virtual screen in a virtual football stadium of a football video game, or the like.

While Figure 4 depicts a single rendered image presented to the HMD user, persons skilled in the art will appreciate that HMDs typically provide a stereoscopic view into the VR environment by providing pairs of stereoscopic images, where each image in a given pair is rendered for display on a respective one of the display screens (and thus a respective eye of the user). Each image in the pair of stereoscopic images exhibit a lateral displacement relative to the other, with the displacement of image features depending upon the (real or simulated) lateral separation of the (real or virtual) cameras by which the images were captured, the angular convergence of the cameras and the (real or simulated) distance of each image feature from the camera position. Therefore, and as will be appreciated by persons skilled in the art, the rendered image depicted in Figure 4 may thus be thought of as one of a pair of stereoscopic images for display at one of the display screens of the HMD.

As will be appreciated by persons skilled in the art, the display screens of a HMD are typically smaller than that of a TV or computer. Moreover, when 2D content is output/overlaid on a virtual surface as part of the HMD's Cinematic Mode, the 2D content does not always fill the entirety of the display screens, but rather the proportion of the 2D content being output for display (and indeed the proportion of the display screens that is taken up by the 2D content) is dependent upon the HMD user's point of view into the 3D VR environment. For example, in Figure 4, the entirety of the 2D content is output for display, but the 2D does not take up all of the display screens of the HMD (indicated by the dashed line). Therefore, the effective size of the screen on which the 2D content is being output is smaller than that of a TV or computer, which makes reading text comprised within subtitles or heads-up displays associated with the 2D content more difficult due to the effects of aliasing.

### 3D VR Environment

In embodiments of the present description, environment generating circuitry 202 is configured to generate the 3D virtual reality environment, wherein the 3D virtual reality environment comprises a virtual surface upon which the 2D content is to be rendered. In embodiments of the present description, environment generating circuitry 202 may be one or more CPUs (such as CPU 20, for example) and/or one or more GPUs (such as GPU 30, for example).

It should be noted that the term "generate" here refers to processes by which the 3D VR environment is created prior to being rendered for display. Examples of such processes include importing game objects into a virtual space, modelling interactions between such game objects based on laws of physics (or other predefined laws such as anti-gravity, for example), and the like.

As mentioned previously, while the description refers to a virtual cinema theatre as the 3D VR environment used in Cinematic Mode, all other types of 3D VR environment are contemplated by the present description (virtual cities, virtual football stadiums, virtual war zones, and the like). Similarly, while description refers to a virtual cinema screen as the virtual surface upon which 2D content is to be rendered, all other types of virtual surfaces are contemplated by the present description (virtual walls, virtual billboards, virtual rock faces, and the like).

### Regions of Interest

In embodiments of the present description, it is desirable to determine which parts of the 2D content are susceptible to the effects of aliasing when the 2D content is output/overlaid on a virtual surface as part of the HMD's cinematic mode. Such parts (hereinafter referred to as "regions of interest") may comprise text such as subtitles or heads-up displays, and/or may comprise visually complex objects such as flowers, highly ornamented surfaces such as cathedral facades, and the like.

Therefore, in embodiments of the present description, recognition circuitry 204 is configured to recognise one or more regions of interest in the 2D content. In embodiments of the present description, recognition circuitry 204 may be one or more CPUs (such as CPU 20, for example) and/or one or more GPUs (such as GPU 30, for example).

Recognition circuitry 204 may be configured (for example, using suitable software instruction) to recognise one or more alphanumeric characters comprised within the 2D content using one or more alphanumeric character detection algorithms (or components thereof) as required. The term "alphanumeric character detection algorithm" refers to any suitable computer-implemented method, software, algorithm, or the like, which causes a computer (such as the system described herein) to detect alphanumeric characters from images comprising textual information. Such algorithms are well-known in the art, examples of which include optical character recognition, optical word recognition, intelligent character recognition, intelligent word recognition, or the like.

Alternatively or in addition, recognition circuitry 204 may be configured to recognise one or more objects comprised within the 2D content by using any commonly known computer vision/object recognition techniques/algorithms. The terms "computer vision algorithm" and "object recognition algorithm" refer to any suitable computer-implemented method, software, algorithm, or the like, which causes a computer (such as the system described herein) to recognise objects (that is, real-world objects, virtual objects, user interface elements, and the like), animals, humans (and optionally faces thereof), or the like in the 2D content. Such algorithms are well-known in the art, examples of which include Viola-Jones detection methods (optionally based on Haar features), scale-invariant feature transforms (SIFTs), histogram of oriented gradients (HOG) features, eigenfaces, eigenfeatures, fisherfaces, and the like.

It will be appreciated that the objects will typically be predetermined objects; that is to say objects previously determined to be of likely interest to the user. Hence for example the object may be a football in a football game.

Alternatively or in addition, machine learning and methods, neural networks, artificial intelligence, or the like may be used to recognise alphanumeric characters, objects, animals, humans (and optionally faces thereof), or the like. Examples of neural network approaches include multilayer perceptrons (MLPs), convolutional neural networks (CNNs), region based convolutional neural networks (R-CNNs), single shot multi-box detectors (SSDs), you only look once (YOLO) methods, single-shot refinement neural networks for object detection (RefineDets), Retina-Net, deformable convolutional networks, and the like.

Alternatively or in addition, where 2D content provides optional subtitles (that is, subtitles that are (prevented from being) displayed in response to a user input), recognition circuitry 204 may be configured to recognise a region of interest by identifying 2D content metadata that defines a location within the 2D content at which the optional subtitles are to be displayed.

Hence more generally, recognition circuitry 204 may be configured to recognise a given region of interest by recognising one or more of:
- a collection of one or more alphanumeric characters (subtitles, for example);
- a user interface, UI, element (a health bar of a virtual character, for example);
- a face of a character (a real or virtual character, for example);
- metadata defining a location within the 2D content at which optional text is to be displayed; and
- a predetermined object (a real or virtual object, for example).

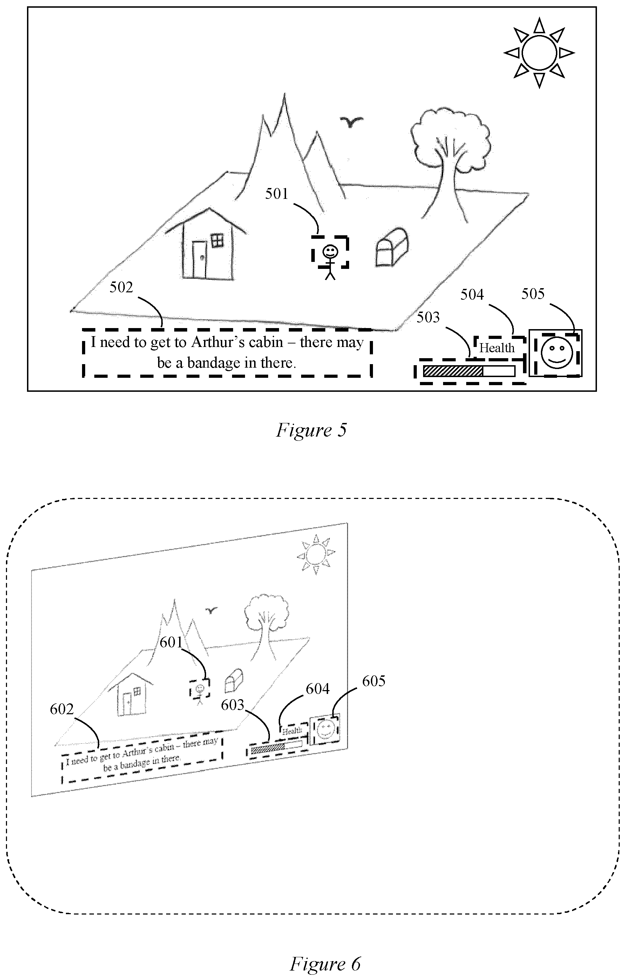

Turning now to Figure 5, and as will be appreciated by persons skilled in the art, this recognition of regions of interest may be performed on the 2D content in its 2D format (that is, prior to being output/overlaid on a virtual surface in a 3D VR environment). For example, recognition circuitry 204 may recognise regions of interest corresponding a face of an in-game character (region 501), subtitles (region 502), a health bar UI element (region 503), textual UI element (region 504), and a UI element depicting a face of the in-game character (region 505) in the 2D image frame of the video game. Hence more generally, recognition circuitry 204 may be configured to recognise, in the 2D content as received by the receiving circuitry (that is, in the 2D content in its original 2D format), one or more of the regions of interest in the 2D content.

Alternatively or in addition, and turning now to Figure 6, recognition circuitry 204 may render a candidate 3D VR environment with the 2D content output/overlaid on the virtual surface, and subsequently recognise the regions of interest in the rendered environment. For example, after having rendered the candidate 3D VR environment, recognising circuitry may recognise regions of interest 601-605 in the 3D VR environment.

While the rendering performed by recognition circuitry 204 may take into account the location and/or orientation of the HMD in order to determine the locations of these regions of interest within the display screens of the HMD, such rendering is preferably not output for display on the HMD's display screens. This is because no upscaling of the regions of interest has taken place at this stage and so such regions may be illegible/incomprehensible by the user. As such, the rendering performed by recognition circuitry 204 may be carried out at a lower level of detail (culled virtual objects such as audience members, reduced/eliminated shading, texturing, lighting, colouring, and the like), which thus reduces the computational expenditure associated with this rendering.

This is what is meant by a "candidate" 3D VR environment; a rendering of the 3D VR environment which is at a lower level of detail than would typically be output to the HMD display screens but at least comprises the virtual surface and the 2D content overlaid thereon, and for these reasons (and other reasons such as lack of upscaling) is preferably not output to the display screens.

As mentioned previously, HMDs typically provide a stereoscopic view into a VR environment by providing pairs of stereoscopic images, where each image in a given pair is rendered for display on a respective one of the display screens (and thus a respective eye of the user). Thus, the rendered image depicted in Figure 6 may be thought of as one of a pair of stereoscopic images suitable for being (yet preferably not) displayed at one of the display screens of the HMD.

As will be appreciated by persons skilled in the art, one or both of such stereoscopic images rendered by recognition circuitry 204 may be used by recognition circuitry 204 for recognition purposes. Using both stereoscopic images may be advantageous in that a more comprehensive recognition process may be carried out. For example, the recognition results of the left and right eye images may be different to each other due to recognition circuitry 204 recognising more alphanumeric characters in the right eye image than the left eye image. The recognition results of both stereoscopic images may thus be combined (effectively a mathematical union of the two sets of recognised regions of interest) in order to determine the total number of regions of interest that have been recognised in one or both stereoscopic images. Alternatively, using both stereoscopic images may be advantageous in that a more efficient upscaling process may be subsequently carried out. For example, the recognition results of the left and right eye images may be different to each other due to recognition circuitry 204 falsely recognising more alphanumeric characters in the right eye image than the left eye image (the recognition circuitry 204 may falsely recognise the window in the cabin as being the number "88" in the right eye image, for example). The recognition results of both stereoscopic images may thus be "overlapped" with each other (effectively a mathematical intersection of the two sets of recognised regions of interest) in order to determine the total number of regions of interest that have only been recognised in both stereoscopic images, thus making the subsequent upscaling more efficient as it will only be performed on verified regions of interest.

Hence more generally, receiving circuitry 200 may be configured to receive viewpoint data indicating a location and/or orientation of the HMD within a real-world environment, and recognition circuitry 204 may be configured to: render, in dependence upon the received viewpoint data, a stereoscopic view of a 3D candidate environment for display at the HMD, wherein the stereoscopic view comprises a left eye view for a left eye display screen of the HMD and a right eye view for a right eye display screen of the HMD, wherein the 3D candidate environment comprises at least: the virtual surface of the generated 3D virtual reality environment, and the 2D content, wherein the 2D content is rendered on the virtual surface, and for at least one of the left eye view and the right eye view, recognise one or more of the regions of interest comprised within the 2D content rendered on the virtual surface.

Optionally, and as mentioned previously, recognition circuitry 204 may be configured to recognise one or more of the regions of interest in the 2D content by determining an intersection or a union of the candidate regions of interest of the left eye view with that of the right eye view.

In any case, once the regions of interest are recognised, a mask image indicating the locations of regions of interest within the 3D VR environment may be generated.

### Mask Image

In embodiments of the present description, mask generating circuitry 206 is configured to generate, in dependence upon a location of the virtual surface within the generated 3D virtual reality environment and in dependence upon at least one recognised region of interest in the 2D content, a mask of the generated 3D virtual reality environment, wherein the mask indicates at least one region within the 3D virtual reality environment in which the at least one recognised region of interest is to be rendered. In embodiments of the present description, mask generating circuitry 206 may be one or more CPUs (such as CPU 20, for example) and/or one or more GPUs (such as GPU 30, for example).

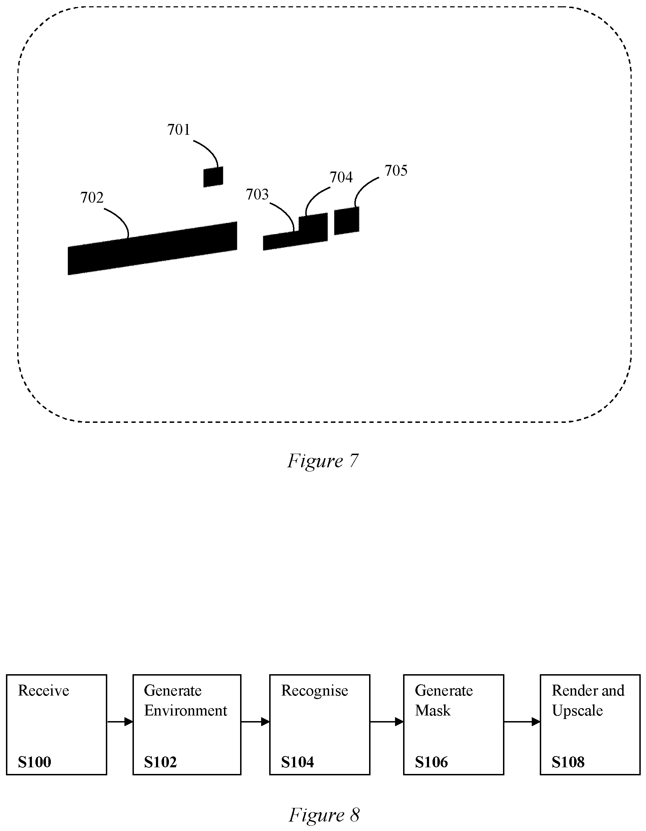

It should be noted that the terms "mask" and "mask image" are used interchangeably in the present description. These terms should be taken to mean an image where the values of a given pixel in the image are determined based on whether (and optional to what extent) the given pixel satisfies one or more criteria. In the context of the present description, and turning now to Figure 7, one such criteria may be whether the given pixel is comprised within a recognised region of interest of the 2D content when overlaid on the virtual surface in the 3D VR environment, for example.

Figure 7 depicts the resulting mask image generated by mask generating circuitry 206. In order to generate this mask image, the 2D content (along with the recognised regions of interest) may be overlaid onto the virtual surface comprised within the 3D VR environment generated by environment generating circuitry 202, and the aforementioned criteria (that is, whether the given pixel is comprised within a recognised region of interest) is used to generate pixel values of the mask image. In this example, if a given pixel satisfies the criteria, it is given a value of one, otherwise it is given a value of zero. Black regions 701-705 indicate the pixels that satisfy the criteria (that is, have a value of one).

Alternatively, where recognition circuitry 204 renders a candidate 3D VR environment comprising the 2D content overlaid onto the virtual surface, and subsequently recognises regions of interest in that candidate environment (as discussed previously with respect to Figure 6), then the 3D mask image depicted in Figure 7 may be generated from that rendered candidate 3D VR environment by using the aforementioned criteria.

As will be appreciated by persons skilled in the art, resulting mask image may be of any format. In one non-limiting example, the mask image may be a spherical image that corresponds to a 360 degree view of the 3D VR environment. As another non-limiting example, the mask image may be a 2D rectangular image that corresponds to the user's point of view within the 3D VR environment, that is, the portion of the 3D VR environment which would be visible to the user (that is, displayed on the user's HMD screens).

Alternatively, a precursory (initial, preliminary) mask image corresponding to the 2D content (in its 2D format) may be generated, and the mask image (whatever format) may be subsequently generated based on the overlaying/mapping of the precursory mask image onto the virtual screen in the 3D VR environment. Hence optionally, mask generating circuitry 206 may be configured to: generate a precursory mask in dependence upon at the least one recognised region of interest in the 2D content, wherein the precursory mask indicates at least one region within the 2D content in which the at least one recognised region of interest is located; map the precursory mask onto the virtual surface within the generated 3D virtual environment; and generate the mask of the generated 3D virtual reality environment in dependence upon the location of the virtual surface within the generated 3D virtual reality environment and in dependence upon the mapped precursory mask.

As mentioned previously, the mask (and optionally the precursory mask, if generated) may comprise a plurality of pixels; and mask generating circuitry 206 may be configured to assign a value of zero to a given pixel if the given pixel is not comprised within the at least one recognised region of interest (that is, does not satisfy the aforementioned criteria), or assign one or more non-zero values to the given pixel if the given pixel is comprised within the at least one recognised region of interest (that is, satisfies the aforementioned criteria), thereby indicating the at least one region within the 3D virtual reality environment in which the at least one recognised region of interest is to be rendered.

As mentioned previously, one of the non-zero values assigned to a given pixel in the event it satisfies the criteria may be a value of one. Alternatively or in addition, a value that indicates the virtual distance between the user and the region of interest may be assigned to the given pixel if it satisfies the criteria. This HMD distance value may subsequently be used to determine whether upscaling of a given region of interest should be triggered (in response to the HMD distance value falling below a threshold distance, for example).

Hence optionally, receiving circuitry 200 may be configured to receive viewpoint data indicating a location and/or orientation of the HMD within a real-world environment; and if the given pixel is comprised within the at least one recognised region of interest, mask generating circuitry 206 may be configured to assign, in dependence upon the received viewpoint data, a HMD proximity value indicating a virtual distance between a location of the HMD within the generated 3D virtual reality environment and a part of the virtual surface that is covered by the given pixel.

Alternatively or in addition, a value that indicates the virtual distance between the user's point of gaze and the region of interest may be assigned to the given pixel if it satisfies the criteria. This gaze distance value may subsequently be used to determine whether upscaling of a given region of interest should be triggered (in response to the gaze distance value falling below a threshold distance, for example).

Hence optionally, receiving circuitry 200 may be configured to receive gaze data indicating a location within a display screen of the HMD at which a user thereof is gazing; and if the given pixel is comprised within the at least one recognised region of interest, mask generating circuitry 206 may be configured to assign, in dependence upon the received gaze data, a gaze proximity value indicating a virtual distance between a location within the generated 3D virtual reality environment at which the user is gazing and a part of the virtual surface that is covered by the given pixel.

In any case, the mask image is used to identify which parts of the 3D VR environment are to be upscaled prior to display at the display screens of the HMD, and thus make such parts more legible/comprehensible to the HMD user (sharper/higher resolution subtitle text or object surface ornamentation, for example).

### Upscaling

In embodiments of the present description, rendering circuitry 208 is configured to render the 3D virtual reality environment for display at a head mounted display, HMD, wherein the rendering circuitry is configured to render the 2D content on the virtual surface, and upscale the at least one region within the 3D virtual reality environment indicated in the mask. In embodiments of the present description, rendering circuitry 208 may be one or more CPUs (such as CPU 20, for example) and/or one or more GPUs (such as GPU 30, for example).

It should be noted that the term "render" here refers to processes by which images of the 3D VR environment are generated for display (at the display screens of the HMD, for example). Examples of such processes include shading, texturing, lighting, colouring, and the like. Similarly, references to overlaying/outputting the 2D content on the virtual surface may be thought of as one of such processes (the 2D content may be overlaid as a texture on the virtual surface as part of a texturing process, for example).

As will be appreciated by persons skilled in the art, any known methods of upscaling (also known as super-resolution) may be used to upscale the regions of interest. Such known methods include (but are not limited to) performing an interpolation (bi-cubic and/or bi-linear interpolations, for example) on the pixel values of the original image in order to determine pixel values for the additional pixels that will form the higher resolution image. Alternatively or in addition, such known methods include (but are not limited to) the use of neural networks. Such neural network methods may be thought of as typically comprising 3 main stages, these being:
- a shallow feature extraction, typically performed using a classical convolutional neural network 'CNN';
- a deep feature extraction, typically performed using a deep CNN or Transformer architectures; and
- upscaling the image to the desired resolution, typically performed using the pixel shuffle technique.

Specific examples of such neural network methods are discussed in Ignatov, A. et al: "Real-Time Quantized Image Super-Resolution on Mobile NPUs, Mobile AI 2021 Challenge: Report".

As mentioned previously, where a HMD proximity value is assigned to a given pixel in the mask image, rendering circuitry 208 may be configured to upscale the least one region within the 3D virtual reality environment indicated in the mask in response to the HMD proximity value assigned to the given pixel becoming less than or equal to a threshold value. This may be advantageous in that upscaling is only triggered when the effective size of the 2D content being output as part of Cinematic Mode is large enough for the user to notice the effects of aliasing on the regions of interest (subtitles, for example). For example, if the user is at a virtual distance of 200 metres away from the virtual screen, then the size of the virtual screen may be too small for any regions of interest to be rendered at an adequate size (subtitles may appear as thin lines, for example, which is typically not rectifiable with upscaling), whereas if the user is within, say, 20 metres of the virtual screen, then the regions of interest may be at an adequate size for the user to notice the effects of aliasing. Such distance-based triggered thus reduces the computational expenditure associated with upscaling, as it is not being carried out at all times, but rather when the user is likely to notice aliasing affecting the regions of interest.

Alternatively or in addition, and as mentioned previously, where a HMD proximity value is assigned to a given pixel in the mask image, rendering circuitry 208 may be configured to upscale the least one region within the 3D virtual reality environment indicated in the mask in response to the gaze proximity value assigned to the given pixel becoming less than or equal to a threshold value. This may be advantageous in that upscaling is only triggered when the HMD user is likely to look at the region of interest, which thus reduces the computational expenditure associated with upscaling, as it is not being carried out at all times, but rather when the user is likely to look at the regions of interest.

In any case, and as will be appreciated by persons skilled in the art, the resolution of the regions of interest is thus made greater than that of the rest of the rendered image of the 3D VR environment, which results in the objects, texts, or the like comprised within those regions of interest being sharper and thus more legible/comprehensible to the HMD user.

### Method of rendering 2D content in a 3D virtual reality environment

Turning now to Figure 8, a method of rendering two-dimensional, 2D, content in a three-dimensional, 3D, virtual reality environment comprises the following steps:
Step S100: receiving the 2D content, the 2D content being in a 2D format, as described elsewhere herein.
Step S102: generating the 3D virtual reality environment, wherein the 3D virtual reality environment comprises a virtual surface upon which the 2D content is to be rendered, as described elsewhere herein.
Step S104: recognising one or more regions of interest in the 2D content, as described elsewhere herein.
Step S106: generating, in dependence upon a location of the virtual surface within the generated 3D virtual reality environment and in dependence upon at least one recognised region of interest in the 2D content, a mask of the generated 3D virtual reality environment, wherein the mask indicates at least one region within the 3D virtual reality environment in which the at least one recognised region of interest is to be rendered, as described elsewhere herein.
Step S108: rendering the 3D virtual reality environment for display at a head mounted display, HMD, wherein the rendering step comprises rendering the 2D content on the virtual surface, and upscaling the at least one region within the 3D virtual reality environment indicated in the mask, as described elsewhere herein

It will be appreciated that the above methods may be carried out on conventional hardware (such as entertainment device 10) suitably adapted as applicable by software instruction or by the inclusion or substitution of dedicated hardware

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention.

## Claims

1. A system for rendering two-dimensional, 2D, content in a three-dimensional, 3D, virtual reality environment, comprising:
receiving circuitry configured to receive the 2D content, the 2D content being in a 2D format;
environment generating circuitry configured to generate the 3D virtual reality environment, wherein the 3D virtual reality environment comprises a virtual surface upon which the 2D content is to be rendered;
recognition circuitry configured to recognise one or more regions of interest in the 2D content;
mask generating circuitry configured to generate, in dependence upon a location of the virtual surface within the generated 3D virtual reality environment and in dependence upon at least one recognised region of interest in the 2D content, a mask of the generated 3D virtual reality environment, wherein the mask indicates at least one region within the 3D virtual reality environment in which the at least one recognised region of interest is to be rendered; and
rendering circuitry configured to render the 3D virtual reality environment for display at a head mounted display, HMD, wherein the rendering circuitry is configured to render the 2D content on the virtual surface, and upscale the at least one region within the 3D virtual reality environment indicated in the mask.

2. A system according to claim 1, wherein the receiving circuitry is configured to receive viewpoint data indicating a location and/or orientation of an HMD within a real-world environment, and the recognition circuitry is configured to:
render, in dependence upon the received viewpoint data, a stereoscopic view of a 3D candidate environment for display at the HMD, wherein the stereoscopic view comprises a left eye view for a left eye display screen of the HMD and a right eye view for a right eye display screen of the HMD, wherein the 3D candidate environment comprises at least:
the virtual surface of the generated 3D virtual reality environment, and
the 2D content, wherein the 2D content is rendered on the virtual surface, and
for at least one of the left eye view and the right eye view, recognise one or more of the regions of interest comprised within the 2D content rendered on the virtual surface.

3. A system according to claim 1 or claim 2, wherein the recognition circuitry is configured to recognise, in the 2D content as received by the receiving circuitry, one or more of the regions of interest in the 2D content.

4. A system according to any preceding claim, wherein the recognition circuitry is configured to recognise a given region of interest by recognising one or more selected from the list consisting of:
i. a collection of one or more alphanumeric characters;
ii. a user interface, UI, element;
iii. a face of a character;
iv. metadata defining a location within the 2D content at which optional text is to be displayed; and
v. a predetermined object.

5. A system according to any preceding claim, wherein the mask generating circuitry is configured to:
generate a precursory mask in dependence upon the at least one recognised region of interest in the 2D content, wherein the precursory mask indicates at least one region within the 2D content in which the at least one recognised region of interest is located;
map the precursory mask onto the virtual surface within the generated 3D virtual environment; and
generate the mask of the generated 3D virtual reality environment in dependence upon the location of the virtual surface within the generated 3D virtual reality environment and in dependence upon the mapped precursory mask.

6. A system according to any preceding claim, wherein:
the mask comprises a plurality of pixels; and
the mask generating circuitry is configured to assign a value of zero to a given pixel if the given pixel is not comprised within the at least one recognised region of interest, or assign one or more non-zero values to the given pixel if the given pixel is comprised within the at least one recognised region of interest, thereby indicating the at least one region within the 3D virtual reality environment in which the at least one recognised region of interest is to be rendered.

7. A system according to claim 6, wherein:
the receiving circuitry is configured to receive viewpoint data indicating a location and/or orientation of an HMD within a real-world environment; and
if the given pixel is comprised within the at least one recognised region of interest, the mask generating circuitry is configured to assign, in dependence upon the received viewpoint data, a HMD proximity value indicating a virtual distance between a location of the HMD within the generated 3D virtual reality environment and a part of the virtual surface that is covered by the given pixel.

8. A system according to claim 7, wherein the rendering circuitry is configured to upscale the at least one region within the 3D virtual reality environment indicated in the mask in response to the HMD proximity value assigned to the given pixel becoming less than or equal to a threshold value.

9. A system according to any one of claims 6 to 8, wherein:
the receiving circuitry is configured to receive gaze data indicating a location within a display screen of the HMD at which a user thereof is gazing; and
if the given pixel is comprised within the at least one recognised region of interest, the mask generating circuitry is configured to assign, in dependence upon the received gaze data, a gaze proximity value indicating a virtual distance between a location within the generated 3D virtual reality environment at which the user is gazing and a part of the virtual surface that is covered by the given pixel.

10. A system according to claim 9, wherein the rendering circuitry is configured to upscale the at least one region within the 3D virtual reality environment indicated in the mask in response to the gaze proximity value assigned to the given pixel becoming less than or equal to a threshold value.

11. A method of rendering two-dimensional, 2D, content in a three-dimensional, 3D, virtual reality environment, comprising the steps of:
receiving the 2D content, the 2D content being in a 2D format;
generating the 3D virtual reality environment, wherein the 3D virtual reality environment comprises a virtual surface upon which the 2D content is to be rendered;
recognising one or more regions of interest in the 2D content;
generating, in dependence upon a location of the virtual surface within the generated 3D virtual reality environment and in dependence upon at least one recognised region of interest in the 2D content, a mask of the generated 3D virtual reality environment, wherein the mask indicates at least one region within the 3D virtual reality environment in which the at least one recognised region of interest is to be rendered; and
rendering the 3D virtual reality environment for display at a head mounted display, HMD, wherein the rendering step comprises rendering the 2D content on the virtual surface, and upscaling the at least one region within the 3D virtual reality environment indicated in the mask.

12. A method according to claim 11, wherein the receiving step comprises receiving viewpoint data indicating a location and/or orientation of an HMD within a real-world environment, and the recognising step comprises:
rendering, in dependence upon the received viewpoint data, a stereoscopic view of a 3D candidate environment for display at the HMD, wherein the stereoscopic view comprises a left eye view for a left eye display screen of the HMD and a right eye view for a right eye display screen of the HMD, wherein the 3D candidate environment comprises at least:
the virtual surface of the generated 3D virtual reality environment, and
the 2D content, wherein the 2D content is rendered on the virtual surface,
for each of the left eye view and the right eye view, recognising one or more candidate regions of interest comprised within the 2D content rendered on the virtual surface, and
recognising one or more of the regions of interest in the 2D content by determining the intersection of the candidate regions of interest of the left eye view with that of the right eye view.

13. A method according to claim 11 or claim 12, wherein the recognising step comprises recognising, in the 2D content as received by the receiving circuitry, one or more of the regions of interest in the 2D content.

14. A computer program comprising computer executable instructions adapted to cause a computer system to perform any one of the methods of claims 11 to 13.

15. A non-transitory, computer-readable storage medium having stored thereon the computer program of claim 14.

## Patentansprüche

1. System zum Rendern von zweidimensionalen, 2D, Inhalten in einer dreidimensionalen, 3D, Virtual-Reality-Umgebung, umfassend:
eine Empfangsschaltung, die konfiguriert ist, um den 2D-Inhalt zu empfangen, wobei der 2D-Inhalt in einem 2D-Format vorliegt;
eine Umgebungserzeugungsschaltung, die konfiguriert ist, um die 3D-Virtual-Reality-Umgebung zu erzeugen, wobei die 3D-Virtual-Reality-Umgebung eine virtuelle Oberfläche umfasst, auf der der 2D-Inhalt zu rendern ist;
eine Erkennungsschaltung, die konfiguriert ist, um einen oder mehrere Bereiche von Interesse in dem 2D-Inhalt zu erkennen;
eine Maskenerzeugungsschaltung, die konfiguriert ist, um in Abhängigkeit von einer Position der virtuellen Oberfläche innerhalb der erzeugten 3D-Virtual-Reality-Umgebung und in Abhängigkeit von mindestens einem erkannten Bereich von Interesse in dem 2D-Inhalt eine Maske der erzeugten 3D-Virtual-Reality-Umgebung zu erzeugen, wobei die Maske mindestens einen Bereich innerhalb der 3D-Virtual-Reality-Umgebung angibt, in dem der mindestens eine erkannte Bereich von Interesse zu rendern ist; und
Renderschaltung, die konfiguriert ist, um die 3D-Virtual-Reality-Umgebung für eine Anzeige an einer Helmanzeige, HMD, zu rendern, wobei die Renderschaltung konfiguriert ist, um den 2D-Inhalt auf der virtuellen Oberfläche zu rendern und den mindestens einen Bereich innerhalb der 3D-Virtual-Reality-Umgebung, die in der Maske angegeben ist, hochzuskalieren.

2. System nach Anspruch 1, wobei die Empfangsschaltung konfiguriert ist, um Blickpunktdaten zu empfangen, die eine Position und/oder Orientierung einer HMD innerhalb einer realen Umgebung angeben, und die Erkennungsschaltung konfiguriert ist zum:
Rendern, in Abhängigkeit von den empfangenen Blickpunktdaten, einer stereoskopischen Ansicht einer 3D-Kandidatenumgebung für die Anzeige an der HMD, wobei die stereoskopische Ansicht eine Ansicht eines linken Auges für einen Bildschirm des linken Auges der HMD und eine Ansicht eines rechten Auges für einen Anzeigenbildschirm des rechten Auges der HMD umfasst, wobei die 3D-Kandidatenumgebung mindestens umfasst:
die virtuelle Oberfläche der erzeugten 3D-Virtual-Reality-Umgebung, und
den 2D-Inhalt, wobei der 2D-Inhalt auf der virtuellen Oberfläche gerendert wird, und
für mindestens eine der Ansicht des linken Auges und der Ansicht des rechten Auges, Erkennen eines oder mehrerer der Bereiche von Interesse, die innerhalb des 2D-Inhalt enthalten sind, der auf der virtuellen Oberfläche gerendert wird.

3. System nach Anspruch 1 oder 2, wobei die Erkennungsschaltung konfiguriert ist, um, in dem 2D-Inhalt, wie er durch die Empfangsschaltung empfangen wird, einen oder mehrere der Bereiche von Interesse in dem 2D-Inhalt zu erkennen.

4. System nach einem der vorstehenden Ansprüche, wobei die Erkennungsschaltung konfiguriert ist, um einen gegebenen Bereich von Interesse durch Erkennen eines oder mehrerer, die aus der Liste ausgewählt sind, zu erkennen, bestehend aus:
i. einer Sammlung von einem oder mehreren alphanumerischen Zeichen;
ii. einem Benutzerschnittstellenelement, UI-Element;
iii. einem Gesicht einer Figur;
iv. Metadaten, die eine Position innerhalb des 2D-Inhalts definieren, an der optionaler Text anzuzeigen ist; und
v. einem vorbestimmten Gegenstand.

5. System nach einem der vorstehenden Ansprüche, wobei die Maskenerzeugungsschaltung konfiguriert ist zum:
Erzeugen einer vorläufigen Maske in Abhängigkeit von dem mindestens einen erkannten Bereich von Interesse in dem 2D-Inhalt, wobei die vorläufige Maske mindestens einen Bereich innerhalb des 2D-Inhalts angibt, in dem sich der mindestens eine erkannte Bereich von Interesse befindet;
Abbilden der vorläufigen Maske auf die virtuelle Oberfläche innerhalb der erzeugten virtuellen 3D-Umgebung; und
Erzeugen der Maske der erzeugten 3D-Virtual-Reality-Umgebung in Abhängigkeit von der Position der virtuellen Oberfläche innerhalb der erzeugten 3D-Virtual-Reality-Umgebung und in Abhängigkeit von der abgebildeten vorläufigen Maske.

6. System nach einem der vorstehenden Ansprüche, wobei:
die Maske eine Vielzahl von Pixel umfasst; und
die Maskenerzeugungsschaltung konfiguriert ist, um einem gegebenen Pixel einen Wert von null zuzuweisen, falls das gegebene Pixel nicht innerhalb dem mindestens einen erkannten Bereich von Interesse enthalten ist, oder dem gegebenen Pixel einen oder mehrere von null verschiedene Werte zuzuweisen, falls das gegebene Pixel innerhalb des mindestens einen erkannten Bereichs von Interesse enthalten ist, wodurch der mindestens eine Bereich innerhalb der 3D-Virtual-Reality-Umgebung angegeben wird, in der der mindestens eine erkannte Bereich von Interesse zu rendern ist.

7. System nach Anspruch 6, wobei:
die Empfangsschaltung konfiguriert ist, um Blickpunktdaten zu empfangen, die eine Position und/oder Orientierung einer HMD innerhalb einer realen Umgebung angeben; und
falls das gegebene Pixel innerhalb dem mindestens einen erkannten Bereich von Interesse enthalten ist, die Maskenerzeugungsschaltung konfiguriert ist, um in Abhängigkeit von den empfangenen Blickpunktdaten einen HMD-Näherungswert zuzuweisen, der eine virtuelle Entfernung zwischen einer Position der HMD innerhalb der erzeugten 3D-Virtual-Reality-Umgebung und einem Teil der virtuellen Oberfläche angibt, der durch das gegebene Pixel abgedeckt wird.

8. System nach Anspruch 7, wobei die Renderschaltung konfiguriert ist, um den mindestens einen Bereich innerhalb der 3D-Virtual-Reality-Umgebung, die in der Maske angegeben ist, als Reaktion darauf hochzuskalieren, dass der HMD-Näherungswert, der dem gegebenen Pixel zugewiesen wird, kleiner als oder gleich einem Schwellenwert wird.

9. System nach einem der Ansprüche 6 bis 8, wobei:
die Empfangsschaltung konfiguriert ist, um Blickdaten zu empfangen, die eine Position innerhalb eines Anzeigebildschirms der HMD angeben, auf die ein Benutzer davon blickt; und
falls das gegebene Pixel innerhalb des mindestens einen erkannten Bereichs von Interesse enthalten ist, die Maskenerzeugungsschaltung konfiguriert ist, um in Abhängigkeit von den empfangenen Blickdaten einen Blicknäherungswert zuzuweisen, der eine virtuelle Entfernung zwischen einer Position innerhalb der erzeugten 3D-Virtual-Reality-Umgebung, auf die der Benutzer blickt, und einem Teil der virtuellen Oberfläche angibt, der durch das gegebene Pixel abgedeckt wird.

10. System nach Anspruch 9, wobei die Renderschaltung konfiguriert ist, um den mindestens einen Bereich innerhalb der 3D-Virtual-Reality-Umgebung, die in der Maske angegeben ist, als Reaktion darauf hochzuskalieren, dass der Blicknäherungswert, der dem gegebenen Pixel zugewiesen wird, kleiner als oder gleich einem Schwellenwert wird.

11. Verfahren zum Rendern von zweidimensionalem, 2D, Inhalt in einer dreidimensionalen, 3D, Virtual-Reality-Umgebung, umfassend die Schritte:
Empfangen des 2D-Inhalts, wobei der 2D-Inhalt in einem 2D-Format vorliegt;
Erzeugen der 3D-Virtual-Reality-Umgebung, wobei die 3D-Virtual-Reality-Umgebung eine virtuelle Oberfläche umfasst, auf der der 2D-Inhalt zu rendern ist;
Erkennen eines oder mehrerer Bereiche von Interesse in dem 2D-Inhalt;
Erzeugen, in Abhängigkeit von einer Position der virtuellen Oberfläche innerhalb der erzeugten 3D-Virtual-Reality-Umgebung und in Abhängigkeit von mindestens einem erkannten Bereich von Interesse in dem 2D-Inhalt, einer Maske der erzeugten 3D-Virtual-Reality-Umgebung, wobei die Maske mindestens einen Bereich innerhalb der 3D-Virtual-Reality-Umgebung angibt, in dem der mindestens eine erkannte Bereich von Interesse zu rendern ist; und
Rendern der 3D-Virtual-Reality-Umgebung für die Anzeige an einer Helmanzeige, HMD, wobei der Renderschritt das Rendern des 2D-Inhalts auf der virtuellen Oberfläche und das Hochskalieren des mindestens einen Bereichs innerhalb der 3D-Virtual-Reality-Umgebung, die in der Maske angegeben ist, umfasst.

12. Verfahren nach Anspruch 11, wobei der Empfangsschritt das Empfangen von Blickpunktdaten umfasst, die eine Position und/oder Orientierung einer HMD innerhalb einer realen Umgebung angeben, und der Erkennungsschritt umfasst:
Rendern, in Abhängigkeit von den empfangenen Blickpunktdaten, einer stereoskopischen Ansicht einer 3D-Kandidatenumgebung für die Anzeige an der HMD, wobei die stereoskopische Ansicht eine Ansicht des linken Auges für einen Anzeigebildschirm des linken Auges der HMD und eine Ansicht des rechten Auges für einen Anzeigebildschirm des rechten Auges der HMD umfasst, wobei die 3D-Kandidatenumgebung mindestens umfasst:
die virtuelle Oberfläche der erzeugten 3D-Virtual-Reality-Umgebung, und
den 2D-Inhalt, wobei der 2D-Inhalt auf der virtuellen Oberfläche gerendert wird,
für jede der Ansicht des linken Auges und der Ansicht des rechten Auges, Erkennen eines oder mehrerer Kandidatenbereiche von Interesse, die innerhalb des 2D-Inhalts enthalten sind, der auf der virtuellen Oberfläche gerendert wird, und
Erkennen eines oder mehrerer der Bereiche von Interesse in dem 2D-Inhalt durch Bestimmen der Schnittmenge der Kandidatenbereiche von Interesse der Ansicht des linken Auges mit derjenigen der Ansicht des rechten Auges.

13. Verfahren nach Anspruch 11 oder 12, wobei der Erkennungsschritt das Erkennen, in dem 2D-Inhalt, wie er durch die Empfangsschaltung empfangen wird, eines oder mehrerer Bereiche von Interesse in dem 2D-Inhalt umfasst.

14. Computerprogramm, umfassend computerausführbare Anweisungen, die angepasst sind, um ein Computersystem zu veranlassen, das Verfahren nach einem der Ansprüche 11 bis 13 durchzuführen.

15. Nicht flüchtiges, computerlesbares Speicherungsmedium, das das Computerprogramm nach Anspruch 14 darauf gespeichert aufweist.

## Revendications

1. Système permettant le rendu d'un contenu bidimensionnel, 2D, dans un environnement de réalité virtuelle tridimensionnel, 3D, comprenant :
une circuiterie de réception configurée pour recevoir le contenu 2D, le contenu 2D étant dans un format 2D ;
une circuiterie de génération d'environnement configurée pour générer l'environnement de réalité virtuelle 3D, dans lequel l'environnement de réalité virtuelle 3D comprend une surface virtuelle sur laquelle le contenu 2D doit être rendu ;
une circuiterie de reconnaissance configurée pour reconnaître une ou plusieurs régions d'intérêt dans le contenu 2D ;
une circuiterie de génération de masque configurée pour générer, en fonction d'un emplacement de la surface virtuelle au sein de l'environnement de réalité virtuelle 3D généré et en fonction d'au moins une région d'intérêt reconnue dans le contenu 2D, un masque de l'environnement de réalité virtuelle 3D généré, dans lequel le masque indique au moins une région au sein de l'environnement de réalité virtuelle 3D dans laquelle l'au moins une région d'intérêt reconnue doit être rendue ; et
une circuiterie de rendu configurée pour rendre l'environnement de réalité virtuelle 3D destiné à afficher sur un visiocasque, HMD, dans lequel la circuiterie de rendu est configurée pour rendre le contenu 2D sur la surface virtuelle, et mettre à l'échelle l'au moins une région au sein de l'environnement de réalité virtuelle 3D indiquée dans le masque.

2. Système selon la revendication 1, dans lequel la circuiterie de réception est configurée pour recevoir des données de point de vue indiquant un emplacement et/ou une orientation d'un HMD au sein d'un environnement réel, et la circuiterie de reconnaissance est configurée pour :
rendre, en fonction des données de point de vue reçues, une vue stéréoscopique d'un environnement candidat 3D pour affichage sur le HMD, dans lequel la vue stéréoscopique comprend une vue de l'œil gauche pour un écran d'affichage de l'œil gauche du HMD et une vue de l'œil droit pour un écran d'affichage de l'œil droit du HMD, dans lequel l'environnement candidat 3D comprend au moins :
la surface virtuelle de l'environnement de réalité virtuelle 3D généré, et
le contenu 2D, dans lequel le contenu 2D est rendu sur la surface virtuelle, et
pour au moins l'une parmi la vue de l'œil gauche et la vue de l'œil droit, reconnaître une ou plusieurs des régions d'intérêt comprises au sein du contenu 2D rendu sur la surface virtuelle.

3. Système selon la revendication 1 ou la revendication 2, dans lequel la circuiterie de reconnaissance est configurée pour reconnaître, dans le contenu 2D tel qu'il est reçu par la circuiterie de réception, une ou plusieurs des régions d'intérêt dans le contenu 2D.

4. Système selon l'une quelconque revendication précédente, dans lequel la circuiterie de reconnaissance est configurée pour reconnaître une région d'intérêt donnée en reconnaissant une ou plusieurs régions sélectionnées dans la liste constituée de :
i. une collection d'un ou de plusieurs caractères alphanumériques ;
ii. un élément d'interface utilisateur, UI ;
iii. un visage d'un personnage ;
iv. des métadonnées définissant un emplacement au sein du contenu 2D au niveau duquel le texte facultatif doit être affiché ; et
v. un objet prédéterminé.

5. Système selon l'une quelconque revendication précédente, dans lequel la circuiterie de génération de masque est configurée pour :
générer un masque précurseur en fonction de l'au moins une région d'intérêt reconnue dans le contenu 2D, dans lequel le masque précurseur indique au moins une région au sein du contenu 2D dans laquelle se trouve l'au moins une région d'intérêt reconnue ;
mapper le masque précurseur sur la surface virtuelle au sein de l'environnement virtuel 3D généré ; et
générer le masque de l'environnement de réalité virtuelle 3D généré en fonction de l'emplacement de la surface virtuelle au sein de l'environnement de réalité virtuelle 3D généré et en fonction du masque précurseur mappé.

6. Système selon l'une quelconque revendication précédente, dans lequel :
le masque comprend une pluralité de pixels ; et
la circuiterie de génération de masque est configurée pour attribuer une valeur de zéro à un pixel donné si le pixel donné n'est pas compris dans l'au moins une région d'intérêt reconnue, ou pour attribuer une ou plusieurs valeurs non nulles au pixel donné si le pixel donné est compris dans l'au moins une région d'intérêt reconnue, indiquant ainsi l'au moins une région au sein de l'environnement de réalité virtuelle 3D dans laquelle l'au moins une région d'intérêt reconnue doit être rendue.

7. Système selon la revendication 6, dans lequel :
la circuiterie de réception est configurée pour recevoir des données de point de vue indiquant un emplacement et/ou une orientation d'un HMD au sein d'un environnement réel ; et
si le pixel donné est compris au sein de l'au moins une région d'intérêt reconnue, la circuiterie de génération de masque est configurée pour attribuer, en fonction des données de point de vue reçues, une valeur de proximité HMD indiquant une distance virtuelle entre un emplacement du HMD au sein de l'environnement de réalité virtuelle 3D généré et une partie de la surface virtuelle qui est couverte par le pixel donné.

8. Système selon la revendication 7, dans lequel la circuiterie de rendu est configurée pour mettre à l'échelle l'au moins une région au sein de l'environnement de réalité virtuelle 3D indiqué dans le masque en réponse à la valeur de proximité HMD attribuée au pixel donné devenant inférieure ou égale à une valeur seuil.

9. Système selon l'une quelconque des revendications 6 à 8, dans lequel :
la circuiterie de réception est configurée pour recevoir des données de regard indiquant un emplacement sur un écran d'affichage du HMD qu'un utilisateur de celui-ci regarde ; et
si le pixel donné est compris dans l'au moins une région d'intérêt reconnue, le circuit de génération de masque est configuré pour attribuer, en fonction des données de regard reçues, une valeur de proximité de regard indiquant une distance virtuelle entre un emplacement dans l'environnement de réalité virtuelle 3D généré que l'utilisateur regarde et une partie de la surface virtuelle qui est couverte par le pixel donné.

10. Système selon la revendication 9, dans lequel la circuiterie de rendu est configurée pour mettre à l'échelle l'au moins une région au sein de l'environnement de réalité virtuelle 3D indiquée dans le masque en réponse à la valeur de proximité de regard attribuée au pixel donné devenant inférieure ou égale à une valeur seuil.

11. Procédé permettant le rendu d'un contenu bidimensionnel, 2D, dans un environnement de réalité virtuelle tridimensionnel, 3D, comprenant les étapes consistant à :
recevoir le contenu 2D, le contenu 2D étant dans un format 2D ;
générer l'environnement de réalité virtuelle 3D, dans lequel l'environnement de réalité virtuelle 3D comprend une surface virtuelle sur laquelle le contenu 2D doit être rendu ;
reconnaitre une ou plusieurs régions d'intérêt dans le contenu 2D ;
générer, en fonction d'un emplacement de la surface virtuelle dans l'environnement de réalité virtuelle 3D généré et en fonction d'au moins une région d'intérêt reconnue dans le contenu 2D, un masque de l'environnement de réalité virtuelle 3D généré, dans lequel le masque indique au moins une région de l'environnement de réalité virtuelle 3D dans laquelle l'au moins une région d'intérêt reconnue doit être rendue ; et
rendre l'environnement de réalité virtuelle 3D pour affichage sur un visiocasque, HMD, dans lequel l'étape de rendu comprend le rendu du contenu 2D sur la surface virtuelle, et mettre à l'échelle l'au moins une région au sein de l'environnement de réalité virtuelle 3D indiquée dans le masque.

12. Procédé selon la revendication 11, dans lequel l'étape de réception comprend la réception de données de point de vue indiquant un emplacement et/ou une orientation d'un HMD au sein d'un environnement réel, et l'étape de reconnaissance comprend :
le rendu, en fonction des données de point de vue reçues, d'une vue stéréoscopique d'un environnement candidat 3D pour affichage sur le HMD, dans lequel la vue stéréoscopique comprend une vue de l'œil gauche pour un écran d'affichage de l'œil gauche du HMD et une vue de l'œil droit pour un écran d'affichage de l'œil droit du HMD, dans lequel l'environnement candidat 3D comprend au moins :
la surface virtuelle de l'environnement de réalité virtuelle 3D généré, et
le contenu 2D, dans lequel le contenu 2D est rendu sur la surface virtuelle,
pour chacune de la vue de l'œil gauche et de la vue de l'œil droit, la reconnaissance d'une ou de plusieurs régions d'intérêt candidates comprises dans le contenu 2D rendu sur la surface virtuelle, et
la reconnaissance d'une ou de plusieurs des régions d'intérêt dans le contenu 2D en déterminant l'intersection des régions d'intérêt candidates de la vue de l'œil gauche avec celle de la vue de l'œil droit.

13. Procédé selon la revendication 11 ou la revendication 12, dans lequel l'étape de reconnaissance comprend la reconnaissance, dans le contenu 2D tel que reçu par la circuiterie de réception, d'une ou de plusieurs des régions d'intérêt dans le contenu 2D.

14. Programme informatique comprenant des instructions exécutables par ordinateur adaptées pour amener un système informatique à réaliser le procédé selon l'une quelconque des revendications 11 à 13.

15. Support de stockage non transitoire lisible par ordinateur sur lequel est stocké le programme informatique selon la revendication 14.
